# EUROPEAN PATENT SPECIFICATION

(11) **EP 4 084 301 B1**
(45) Date of publication and mention of the grant of the patent: **29.11.2023**
(21) Application number: 21170843.3
(22) Date of filing: 28.04.2021
(51) Int. Cl.: H02K 3/32, H02K 3/52

(54) **PREFORMED COIL ASSEMBLY FOR A STATOR OF AN ELECTRIC MOTOR, COMPRISING COIL CENTERING INSULATION FILMS**
VORGEFORMTE SPULENANORDNUNG FÜR EINEN STATOR EINES ELEKTROMOTORS MIT EINER SPULE ZUR ZENTRIERUNG VON ISOLATIONSFOLIEN
ENSEMBLE BOBINE PRÉFORMÉE POUR UN STATOR D'UN MOTEUR ÉLECTRIQUE COMPRENANT DES FILMS D'ISOLATION DE CENTRAGE DE BOBINE

(43) Date of publication of application: 02.11.2022
(73) Proprietor: ETEL S.A., 2112 Môtiers (CH)
(72) Inventor: Veronesi, Daniele, 2035 Corcelles (CH); Pourchet, Johann, 25650 La Chaux (FR)
(74) Representative: P&TS SA (AG, Ltd.)

(56) References cited:
- EP-A1- 3 648 312
- EP-A1- 4 167 442
- EP-A2- 3 203 613
- JP-A- 2003 061 286
- JP-A- 2008 206 322
- JP-A- 2017 188 981
- JP-A- 2018 078 749
- JP-A- 2019 062 681

## Description

### Field of the invention

The present invention relates to a preformed coil assembly for a stator of an electric motor. The preformed coil assembly comprises coil centering insulation films to center the coil assembly with respect to a tooth of a stator when mounted thereon. The present invention also relates to a method of manufacturing a preformed coil assembly and to an electric motor comprising preformed coil assemblies mounted on respective teeth of the stator.

### Background of the invention

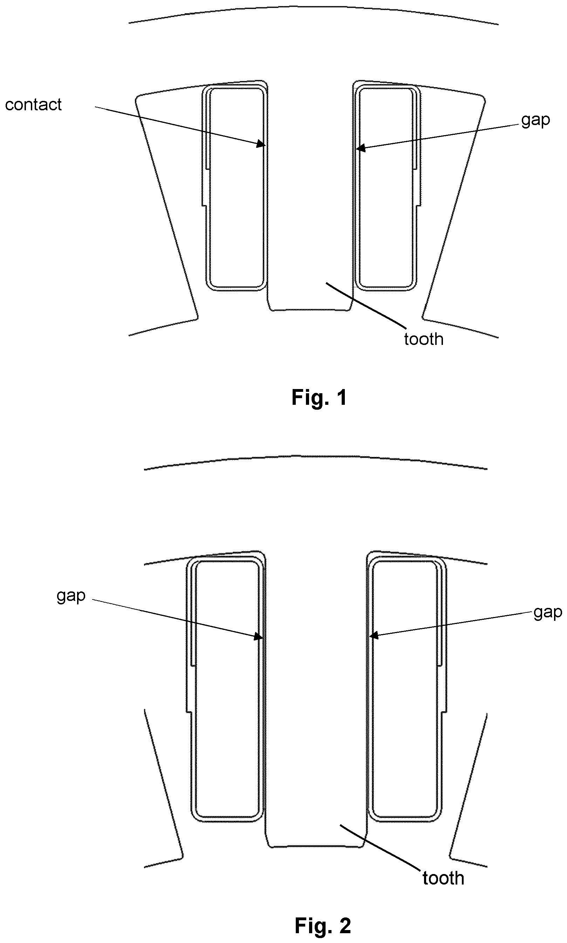

Accurate positioning of preformed coil assemblies on corresponding laminated teeth of a stator of an electric motor is difficult to achieve. In general, each preformed coil assembly is manually positioned with respect to a corresponding tooth during the assembly of the motor. Consequently, the preformed coil assembly is usually not centred and tend to lean against one side or the other side of the tooth as illustrated in Figure 1.

From a dielectric insulation point of view, each preformed coil assembly should ideally be centred with respect to the corresponding tooth and leave a small gap on both sides of the tooth as illustrated in Figure 2. The dielectric insulation of motors is heavily linked to the physical interface between the performed coil assemblies and the corresponding teeth of the stator. The symmetry of the gaps on both sides of the tooth improves dramatically the dielectric insulation of the motor and its lifetime when subjected to high voltages as these gaps are filled with insulating liquid compound during a vacuum potting process. Conversely, any asymmetry between the gaps on both sides of each tooth would have an adverse effect on insulation of the motor and its lifetime.

The gaps between opposite sides of a tooth of a stator and a corresponding preformed coil assembly mounted on the tooth may be defined the by thickness of the two opposite lateral walls of a winding carrier of the preformed coil assembly as illustrated in Figure 3. DE102011081030A1 discloses an example of such winding carrier.

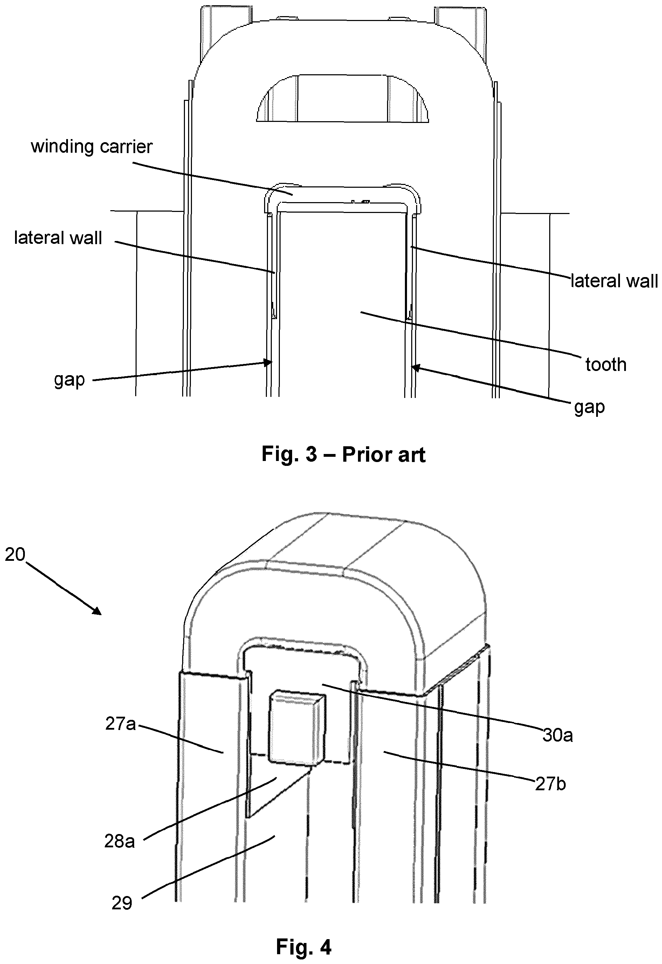

The problem with the winding carrier of Figure 3 stems from the fact that the thickness of its opposite lateral walls defines the thickness of the gap itself. From a dielectric point of view, the gap should be big, but from a performance point of view, the gap must be small to maximize the copper filling factor and the heat dissipation. The best compromise is to have a winding carrier with opposite lateral walls having each a very small and identical thickness.

In order to achieve this thickness, the methodology for producing the winding carrier has to be based on injection technology. Due to this unique choice, the effort in terms of time and the cost to make a new winding carrier is very high. For prototype motors and small series, it is not conceivable to create a new winding carrier at a reasonable cost. In addition, opposite thin lateral walls of the winding carrier in the core of the coils limits the process of winding in terms of winding speed and tension on the copper wire during winding of orthocyclic coils as excessive speed and tension may break the lateral walls which are typically made out of glass reinforced polymer.

An aim of the present invention is therefore to provide a preformed coil assembly configured to obviate or at least mitigate the above disadvantages.

In particular, an aim of the present invention is to provide a preformed coil assembly that is cost effective to manufacture.

Another aim of the present invention is to provide a preformed coil assembly comprising winding carriers that are robust enough to withstand the tension applied by the copper wire during winding of othocyclic coils.

### Brief summary of the invention

These aims are achieved by a preformed coil assembly for a stator of an electric motor, having a first and a second winding carrier located on respective opposite ends of the preformed coil assembly, and a winding part wound around the first and second winding carriers such as to form a first and a second elongated winding portion with an elongated opening therebetween to be fitted around a tooth of a stator. The tooth comprises two opposite lateral sides. The preformed coil assembly further comprises a first and a second insulation film disposed around respectively the first and second winding portions. Each of said first and second insulation film comprises an upper and a lower folded portion having each a superposed insulation film portion. One side of each superposed film insulation portion rests against a corresponding portion of the insulating film on an inner side of respective first and second winding portions. The other side of each superposed insulation film portion rests against respective first and second opposite walls of respective winding carriers to ensure a first and a second distance between respective opposite lateral sides of the tooth and a corresponding non-folded portion of respective first and second insulation films. The first and second distances are equal so that the preformed coil assembly is centered with respect to the corresponding tooth when mounted therearound.

In an embodiment, each of said first and second distances is between 0.2mm and 0.4mm.

In an embodiment, each of said first and second distances is substantially equal to 0.3mm.

In an embodiment, the thickness of each of the first and second insulation films in the unfolded region ranges from 0.2mm and 0.4mm and is preferably substantially equal to 0.3 mm. The thickness of the film in the upper and lower folded portions ranges from 0.4mm and 0.8mm and is preferably substantially equal to 0.6mm. The thickness of each superposed film insulation portion ranges from 0.2mm and 0.4mm and is preferably equal to 0.3mm.

In an embodiment, each of the first and second winding carriers comprises a distal winding portion and a base portion comprising the first and second opposite lateral walls. The lower portion of the distal winding portion adjoining the base portion is wider than the base portion with protections extending perpendicularly to respective opposite lateral walls of the base portion to a distal end such that a folded region of each of the first and the second insulation films lies against the corresponding projections, preferably against a flat surface thereof.

In an embodiment, the distance between each of the opposite lateral walls and the distal end of the corresponding projections is substantially equal to the thickness of the corresponding folded portions of the corresponding insulation film.

In an embodiment, said distance is substantially equal to 0.6mm.

In an embodiment, the distal winding portion of each of the first and second winding carriers comprises two opposite lateral walls resting against a corresponding portion of the first and second elongated winding portions which is not covered with any insulation film.

Another aspect of the invention relates to a stator for an electric motor, notably a rotary electric motor, comprising a plurality of teeth and a corresponding plurality of preformed coil assemblies mounted around said plurality of teeth. The distance between respective opposite lateral sides of each tooth and the corresponding non-folded portion of respective first and second insulation film forms a gap on both sides of each tooth filled with an insulating resin.

Another aspect of the invention relates to an electric motor, in particular a rotary electric motor, comprising the above stator.

Another aspect of the invention is a method of manufacturing a preformed coil assembly comprising the following steps:
- mounting a first and a second winding carrier on respective ends of a winding carrier support, wherein each winding carrier comprises a distal winding portion and a base portion comprising two opposite lateral walls, the lower portion of the distal winding portion adjoining the base portion being wider than the base portion, thereby forming a first and second series of protections extending perpendicularly to respective opposite lateral walls;
- providing a first and a second insulation film and folding two opposite portions of each of said first and a second insulation film;
- applying each folded portion against respective two opposite lateral walls of respective first and second winding carriers, wherein a folding region lies against a flat surface of respectively the first and second series of projections of the corresponding winding carrier;

- turning a wire winding around the first and second winding carriers to obtain a winding part wound around the first and second winding carriers such as to form a first and a second elongated winding portion with an elongated opening therebetween, and
- wrapping the first and second insulation films around respectively the first and second elongated winding portions.

### Brief description of the drawings

The invention will be better understood with the aid of the description of several embodiments given by way of examples and illustrated by the figures, in which:
- Figure 1 shows a cross-sectional view of a tooth of a stator with a preformed coil assembly mounted therearound asymmetrically with respect to the tooth;
- Figure 2 shows a cross-sectional view of a tooth of a stator with a preformed coil assembly mounted therearound symmetrically with respect to the tooth;
- Figure 3 shows a front view section of an upper portion of a preformed coil assembly mounted on a stator tooth according to the prior art;
- Figure 4 shows a perspective view of an upper portion of a preformed coil assembly according to an embodiment of the invention;
- Figure 5 shows a front view of the upper portion of the preformed coil assembly of Figure 4 mounted on a stator tooth;
- Figure 6 shows a perspective view of the preformed coil assembly as partly shown in Figure 4;
- Figure 7 shows a front view of the preformed coil assembly of Figure 6;
- Figure 8 shows a perspective view of an upper portion of one of the two insulation films of the preformed coil assembly illustrating a folded portion;
- Figure 9 shows a perspective view one of two winding carriers of the preformed coil assembly of Figure 7, and
- Figure 10 shown another perspective view of the winding carrier of Figure 9 taken from another angle.

### Detailed description of several embodiments of the invention

Figure 1 shows a preformed coil assembly mounted on a tooth of a stator asymmetrically with respect to the tooth while Figure 2 shows a preformed coil assembly as described thereafter mounted symmetrically with respect to the tooth to improve dramatically the dielectric insulation of the motor and its lifetime when subjected to high voltages.

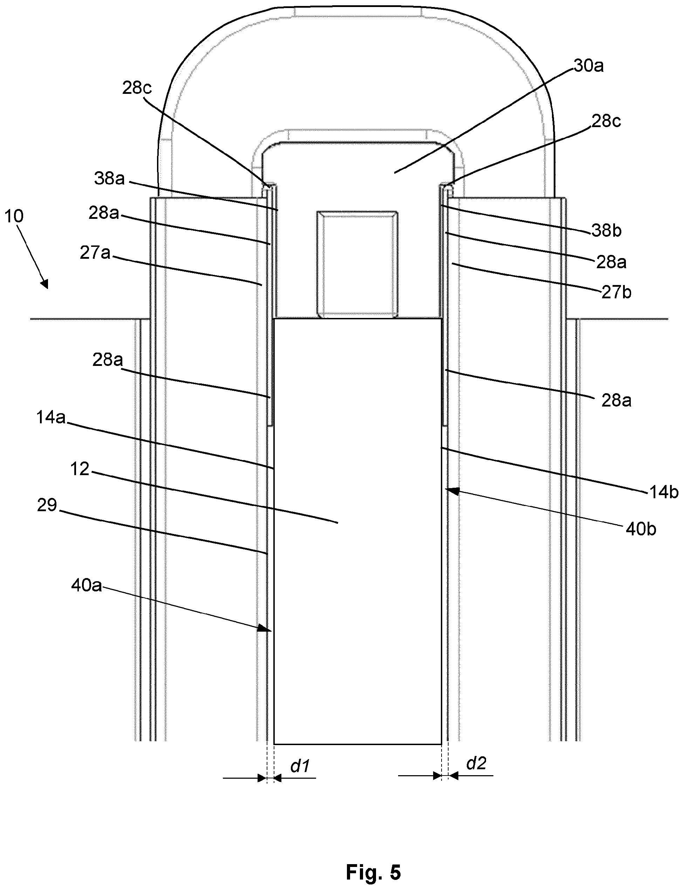

With reference to Figures 4 to 7, the preformed coil assembly 20 comprises a first and a second winding carrier 30a, 30b located on respective opposite ends of the preformed coil assembly 20, a winding part 22 wound around the first and second winding carriers 30a, 30b such as to form a first and a second elongated winding portion 24a, 24b with an elongated opening 26 therebetween to be fitted around a tooth 12 of a stator 10 as shown in Figure 5.

The preformed coil assembly 20 further comprises a first and a second insulation film 27a, 27b as shown in Figure 4. One insulation film 27a is wrapped around one elongated winding portion 24a and the other insulation film 27b is wrapped around the other elongated winding portion 24b. Each insulation film 27a, 27b comprises an upper and lower folded portions 28a, 28b and a non-folded portion 29 therebetween. Each folded portion 28a, 28b comprises a superposed insulation film portion. Said otherwise, the thickness of folded portion 28a, 28b is twice the thickness of the non-folded portion 29.

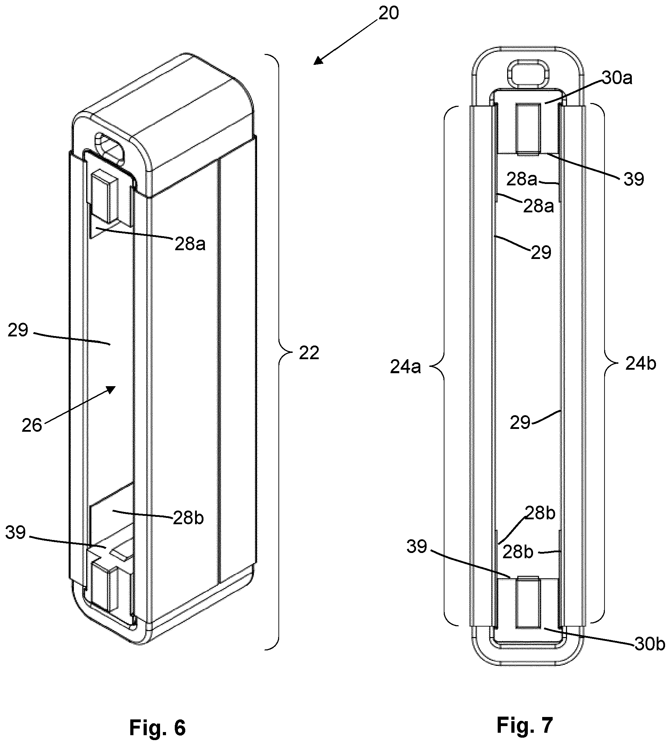

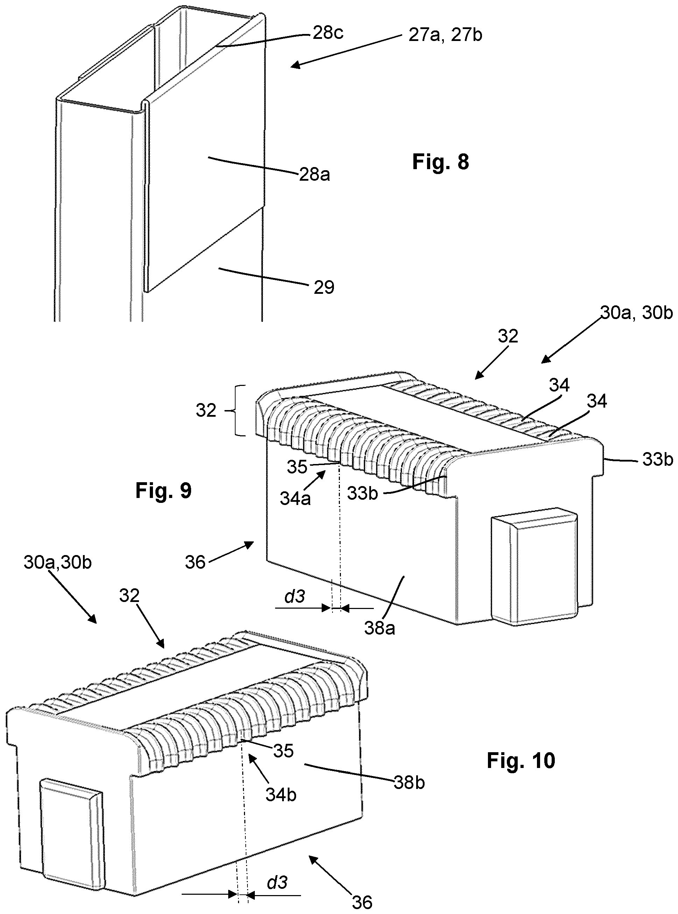

As shown in Figures 9 and 10, each winding carrier 30a, 30b comprises a distal winding portion 32 and a base portion 36. The base portion 36 of each winding carrier 30a, 30b comprises two opposite lateral walls 38a, 38b, and a bottom side 39, as shown in Figures 6 and 7, adapted to be snapped respectively on the upper and lower sides of a tooth 12 of the stator 10.

Referring to Figure 5 to 7, one side of the superposed insulation film portion of each upper and lower folded portion rests against a corresponding portion of the insulating film 27a, 27b on an inner side of respective first and second winding portions 24a, 24b while the other side of each superposed insulation film portion of the corresponding insulation film 27a, 27b rests against the respective two opposite lateral walls 38a, 38b of respective winding carriers 30a, 30b.

As shown in Figures 9 and 10, the distal winding portion of each of the first and second winding carriers 30a, 30b is provided with adjacent grooves 34 for guiding the winding direction of the electrical conductor forming the winding during the winding process. Preformed coil assemblies 20 are then pushed radially on corresponding teeth 12 of the stator 10 (Figure 5).

The lower portion of the distal winding portion 32 adjoining the base portion 36 is wider than the base portion 36 forming a first and a second series of protections 34a, 34b extending perpendicularly to respective opposite lateral walls 38a, 38b and having a distal end 35 corresponding to the bottom of any adjacent groove 34 such that a folded region 28c of each of the first and the second insulation films 27a, 27b is arranged against the corresponding series of projections 34a, 34b (Figure 5), preferably against a flat surface thereof.

More particularly, the distance *d3* in Figures 9 and 10 extending from one lateral wall 38b and the corresponding distal end 35 is equal to the thickness of the corresponding folded portions 28a of the corresponding insulation film 27a, 27b as shown in Figure 5. The folded portion 28a of each insulation film creates a first and a second gap 40a, 40b of the same width between the respective two opposite sides 14a, 14b of the tooth 12 and a non-folded portion 29 of respective insulation film thereby ensuring that the performed coil assembly is symmetrically center with respect to the tooth 12.

The thickness of the first and second insulation films 27a,27b, in the non-folded region 29 is between 0.2mm and 0.4mm and preferably around 0.3mm so as to create a first and a second gap having each an identical width ranging from 0.2mm and 0.4mm and preferably around 0.3mm.

The preformed coil assembly 20 is formed by a winding process (not shown) which consists in placing the first and second winding carriers 30a, 30b on both ends of a rectangular metallic support with the same shape of a tooth of the stator. The wire turns are then wound in layers by a winding machine around the first and second winding carriers 30a, 30b. The wire turns may be wound for example by placing the next layer shifted by half the wire diameter to lay the wires in a hexagonal mesh.

After self-alignment of all preformed coil assemblies 20 with the corresponding teeth 12 of the stator 10 and once all the electric connexions are done, a potting operation is performed, which consists in placing the stator in a potting mould into which a synthetic resin is injected (typically under vacuum) that hardens, permanently protecting the assembly in particular against shock, vibration, water infiltration and moisture.

The synthetic resin fills up the first and second gaps 40a, 40b between each tooth 12 and the non-folded portion 29 of respective first and second insulation films 27a, 27b of each preformed coil assembly, thereby improving dramatically the dielectric insulation of the motor and its lifetime when subjected to high voltages.

### Reference list

Stator 10
   Tooth 12
   two opposite lateral sides 14a, 14b
Preformed coil assembly 20
   Winding part 22
      First and second winding portion 24a, 24b
      Elongated opening 26
   First and second insulation films 27a, 27b
      Folded portions 28a, 28b
         Folded region 28c
      Non-folded portion 29
   First and second winding carriers 30a, 30b
      Distal winding portion 32
         Opposite lateral walls 33a, 33b
         Adjacent grooves 34
         First and second projections 34a, 34b
            Distal end 35
      Base portion 36
         Opposite lateral walls 38a, 38b
         Front side 39
      First and second distances *d1, d2*
      Gaps 40a, 40b

## Claims

1. A preformed coil assembly (20) for a stator (10) of an electric motor, having a first and a second winding carrier (30a, 30b) located on respective opposite ends of the preformed coil assembly (20), a winding part (22) wound around the first and second winding carriers (30a, 30b) such as to form a first and a second elongated winding portion (24a, 24b) with an elongated opening (26) therebetween to be fitted around a tooth (12) of a stator (10), the tooth comprising two opposite lateral sides (14a, 14b), the preformed coil assembly (20) further comprising a first and a second insulation film (27a, 27b) disposed around respectively said first and second winding portions (24a, 24b), **characterised in that** each of said first and second insulation films (27a, 27b) comprises an upper and a lower folded portion (28a, 28b) having each a superposed insulation film portion, one side of each superposed film insulation portion resting against a corresponding portion of the insulating film (27a, 27b) on an inner side of respective first and second winding portions (24a, 24b), the other side of each superposed insulation film portion resting against respective first and second opposite walls (38a, 38b) of respective winding carriers (30a, 30b) to ensure a first and a second distance *(d1, d2)* between respective opposite lateral sides (14a, 14b) of the tooth (12) and a corresponding non-folded portion (29) of respective first and second insulation films (27a, 27b), said first and second distances *(d1, d2)* being equal so that the preformed coil assembly (20) is centered with respect to said tooth when mounted therearound.

2. The preformed coil assembly (20) according to claim 1, wherein each of said first and second distances *(d1, d2)* is between 0.2mm and 0.4mm.

3. The preformed coil assembly (20) according to the preceding claim, wherein each of said first and second distances *(d1, d2)* is substantially equal to 0.3mm.

4. The preformed coil assembly (20) according to any preceding claim, wherein the thickness of each of said first and second insulation films (27a, 27b) in said unfolded region (29) ranges from 0.2mm and 0.4mm and is preferably substantially equal to 0.3 mm, and wherein the thickness of the film in said upper and lower folded portions (28a, 28b) ranges from 0.4mm and 0.8mm is preferably substantially equal to 0.6mm, the thickness of each superposed film insulation portion being preferably equal to 0.3mm.

5. The preformed coil assembly (20) according to any preceding claim, wherein each of the first and second winding carriers (30a, 30b) comprises a distal winding portion (32) and a base portion (36) comprising said first and second opposite lateral walls (38a, 38b), the lower portion of the distal winding portion (32) adjoining the base portion (36) being wider than the base portion with protections (34a, 34b) extending perpendicularly to respective first and second opposite lateral walls (38a, 38b) of the base portion (36) to a distal end (25) such that a folded region (28c) of each of the first and the second insulation films (27a, 27b) lies against the corresponding projections (34a, 34b), preferably against a flat surface thereof.

6. The preformed coil assembly (20) according to the preceding claim, wherein the distance (d3) between each of said opposite lateral walls (38a, 38b) and the distal end (25) of the corresponding projections (34a, 34b) is substantially equal to the thickness of the corresponding folded portions (28a, 28b) of the corresponding insulation film (27a, 27b).

7. The preformed coil assembly (20) according to the preceding claim, wherein said distance (d3) is substantially equal to 0.6mm.

8. The preformed coil assembly (20) according to any of claims 5 to 7, wherein said distal winding portion (32) of each of the first and second winding carriers (30a, 30b) comprises two opposite lateral walls (33a, 33b) resting against a corresponding portion the first and second elongated winding portions (24a, 24b) which is not covered with any insulation film.

9. A stator (10) for an electric motor comprising a plurality of teeth (12) and a corresponding plurality of preformed coil assemblies (20) according to any preceding claim mounted around said plurality of teeth, wherein the distance *(d1, d2)* between respective opposite lateral sides (14a, 14b) of each tooth (12) and the corresponding non-folded portion (29) of respective first and second insulation film (27a, 27b) forms a gap (40a, 40b) on both sides of each tooth (40a, 40b) filled with an insulating resin.

10. An electric motor, in particular a rotary electric motor, comprising the stator (10) according to the preceding claim.

11. Method of manufacturing a preformed coil assembly according to any of claims 1 to 8, comprising the following steps:
- mounting a first and a second winding carrier (30a, 30b) on respective ends of a winding carrier support, wherein each winding carrier comprises a distal winding portion (32) and a base portion (36) comprising two opposite lateral walls (38a, 38b), the lower portion of the distal winding portion (32) adjoining the base portion (36) being wider than the base portion forming a first and second series of protections (34a, 34b) extending perpendicularly to respective opposite lateral walls (38a, 38b);
- providing a first and a second insulation film (27a, 27b) and folding two opposite portions of each of said first and a second insulation film;
- applying each folded portion (28c) against respective two opposite lateral walls (38a, 38b) of respective first and second winding carriers (30a, 30b), wherein a folding region (28c) lies against a flat surface of respectively the first and second series of protections (34a, 34b) of the corresponding winding carrier (30a, 30b);
- turning a wire winding around the first and second winding carriers (30a, 30b) to obtain winding part (22) wound around the first and second winding carriers (30a, 30b) such as to form a first and a second elongated winding portion (24a, 24b) with an elongated opening (26) therebetween, and
- wrapping said first and second insulation films (27a, 27b) around respectively said first and second elongated winding portion (24a, 24b).

## Patentansprüche

1. Vorgeformte Spulenbaugruppe (20) für einen Stator (10) eines Elektromotors, mit einem ersten und einem zweiten Wicklungsträger (30a, 30b), die an jeweiligen gegenüberliegenden Enden der vorgeformten Spulenbaugruppe (20) angeordnet sind, einem Wicklungsteil (22), das um den ersten und den zweiten Wicklungsträger (30a, 30b) gewickelt ist, um einen ersten und einen zweiten länglichen Wicklungsabschnitt (24a, 24b) mit einer länglichen Öffnung (26) zwischen den Wicklungen zu bilden, die um einen Zahn (12) eines Stators (10) herum angebracht wird, der Zahn zwei einander gegenüberliegende Seiten (14a, 14b) aufweist, wobei die vorgeformte Spulenbaugruppe (20) ferner einen ersten und einen zweiten Isolierfilm (27a, 27b) aufweist, die um den ersten bzw. den zweiten Wicklungsabschnitt (24a, 24b) herum angeordnet sind, **dadurch gekennzeichnet, dass** der erste und der zweite Isolierfilm (27a, 27b) jeweils einen oberen und einen unteren gefalteten Abschnitt (28a, 28b) aufweisen, die jeweils einen überlagerten Bereich (28b) aufweisen, 28b) aufweist, die jeweils einen übereinanderliegenden Isolierfilmabschnitt aufweisen, wobei eine Seite jedes übereinanderliegenden Filmisolierabschnitts an einem entsprechenden Abschnitt des Isolierfilms (27a, 27b) an einer Innenseite des jeweiligen ersten und zweiten Wicklungsabschnitts (24a, 24b) anliegt, und die andere Seite jedes übereinanderliegenden Isolierfilmabschnitts an der jeweiligen ersten und zweiten gegenüberliegenden Wand (38a, 38b) des jeweiligen Wicklungsträgers (30a, 30b) anliegt, um einen ersten und einen zweiten Abstand (d1, d2) zwischen den jeweiligen gegenüberliegenden Seiten (14a, 14b) des Zahns (12) und einem entsprechenden nicht gefalteten Abschnitt (29) des jeweiligen ersten und zweiten Isolierfilms (27a, 27b) zu gewährleisten, wobei der erste und der zweite Abstand (d1, d2) gleich sind, so dass die vorgeformte Spulenbaugruppe (20) in Bezug auf den Zahn zentriert ist, wenn sie um diesen angeordnet ist.

2. Die vorgeformte Spulenbaugruppe (20) nach Anspruch 1, wobei jeder der ersten und zweiten Abstände *(d1, d2)* zwischen 0,2 mm und 0,4 mm beträgt.

3. Die vorgeformte Spulenbaugruppe (20) nach dem vorhergehenden Anspruch, wobei jeder der ersten und zweiten Abstände *(d1, d2)* im Wesentlichen gleich 0,3 mm ist.

4. Vorgeformte Spulenbaugruppe (20) nach einem der vorhergehenden Ansprüche, wobei die Dicke jeder des ersten und zweiten Isolierfilms (27a, 27b) in dem ungefalteten Bereich (29) im Bereich von 0,2 mm und 0,4 mm liegt und vorzugsweise im Wesentlichen gleich 0,3 mm ist, und wobei die Dicke des Films in den oberen und unteren gefalteten Abschnitten (28a, 28b) im Bereich von 0,4 mm und 0,8 mm liegt und vorzugsweise im Wesentlichen gleich 0,6 mm ist, wobei die Dicke jedes überlagerten Isolierfilmabschnitts vorzugsweise gleich 0,3 mm ist.

5. Die vorgeformte Spulenbaugruppe (20) nach einem der vorhergehenden Ansprüche, wobei jeder der ersten und zweiten Wicklungsträger (30a, 30b) einen distalen Wicklungsabschnitt (32) und einen Basisabschnitt (36) umfasst, der die ersten und zweiten gegenüberliegenden Seitenwände (38a, 38b) umfasst, wobei der untere Abschnitt des distalen Wicklungsabschnitts (32), der an den Basisabschnitt (36) angrenzt, breiter ist als der Basisabschnitt mit Vorsprüngen (34a, 34b), die sich senkrecht zu den jeweiligen ersten und zweiten gegenüberliegenden Seitenwänden (38a, 38b) des Basisabschnitts (36) zu einem distalen Ende (25) erstrecken, so dass ein gefalteter Abschnitt (28c) jedes der ersten und zweiten Isolierfilme (27a, 27b) gegen die entsprechenden Vorsprünge (34a, 34b), vorzugsweise gegen eine flache Oberfläche davon, liegt.

6. Die vorgeformte Spulenbaugruppe (20) nach dem vorhergehenden Anspruch, wobei der Abstand (*d3*) zwischen jeder der gegenüberliegenden Seitenwände (38a, 38b) und dem distalen Ende (25) der entsprechenden Vorsprünge (34a, 34b) im Wesentlichen gleich der Dicke der entsprechenden gefalteten Abschnitte (28a, 28b) der entsprechenden Isolierfilm (27a, 27b) ist.

7. Die vorgeformte Spulenbaugruppe (20) nach dem vorhergehenden Anspruch, wobei der Abstand (d3) im Wesentlichen gleich 0,6 mm ist.

8. Die vorgeformte Spulenbaugruppe (20) nach einem der Ansprüche 5 bis 7, wobei der distale Wicklungsabschnitt (32) jedes der ersten und zweiten Wicklungsträger (30a, 30b) zwei gegenüberliegende Seitenwände (33a, 33b) umfasst, die an einem entsprechenden Abschnitt der ersten und zweiten länglichen Wicklungsabschnitte (24a, 24b) anliegen, der nicht mit einem Isolierfilm bedeckt ist.

9. Stator (10) für einen Elektromotor, der eine Mehrzahl von Zähnen (12) und eine entsprechende Mehrzahl von vorgeformten Spulenbaugruppen (20) nach einem der vorhergehenden Ansprüche umfasst, die um die Mehrzahl von Zähnen herum angebracht sind, wobei der Abstand *(d1, d2)* zwischen den jeweiligen gegenüberliegenden seitlichen Seiten (14a, 14b) jedes Zahns (12) und dem entsprechenden nicht gefalteten Abschnitt (29) des jeweiligen ersten und zweiten Isolierfilms (27a, 27b) einen Spalt (40a, 40b) auf beiden Seiten jedes Zahns (40a, 40b) bildet, der mit einem Isolierharz gefüllt ist.

10. Elektromotor, insbesondere Rotationselektromotor, mit dem Stator (10) nach dem vorhergehenden Anspruch.

11. Verfahren zur Herstellung einer vorgeformten Spulenbaugruppe nach einem der Ansprüche 1 bis 8, mit den folgenden Schritten:
- Anbringen eines ersten und eines zweiten Wicklungsträgers (30a, 30b) an jeweiligen Enden eines Wicklungsträgerträgers, wobei jeder Wicklungsträger einen distalen Wicklungsabschnitt (32) und einen Basisabschnitt (36) mit zwei gegenüberliegenden Seitenwänden (38a, 38b) umfasst, wobei der untere Abschnitt des distalen Wicklungsabschnitts (32), der an den Basisabschnitt (36) angrenzt, breiter als der Basisabschnitt ist und eine erste und eine zweite Reihe von Vorsprüngen (34a, 34b) bildet, die sich senkrecht zu jeweiligen gegenüberliegenden Seitenwänden (38a, 38b) erstrecken;
- Bereitstellen eines ersten und eines zweiten Isolierfilms (27a, 27b) und Falten von zwei gegenüberliegenden Abschnitten des ersten und des zweiten Isolierfilms;
- Anlegen jedes gefalteten Abschnitts (28c) an zwei gegenüberliegende Seitenwände (38a, 38b) des ersten bzw. des zweiten Wicklungsträgers (30a, 30b), wobei ein gefalteter Abschnitt (28c) an einer flachen Oberfläche der ersten bzw. zweiten Reihe von Vorsprüngen (34a, 34b) des entsprechenden Wicklungsträgers (30a, 30b) anliegt;
- Drehen einer Spulenwicklung um den ersten und den zweiten Wicklungsträger (30a, 30b), um einen Wicklungsteil (22) zu erhalten, der um den ersten und den zweiten Wicklungsträger (30a, 30b) gewickelt ist, um einen ersten und einen zweiten länglichen Wicklungsabschnitt (24a, 24b) mit einer länglichen Öffnung (26) dazwischen zu bilden, und - Wickeln der ersten und der zweiten Isolierfilm (27a, 27b) um den ersten bzw. den zweiten länglichen Wicklungsabschnitt (24a, 24b).

## Revendications

1. Assemblage de bobine préformée (20) pour un stator (10) d'un moteur électrique, comportant un premier et un second support d'enroulement (30a, 30b) situés aux extrémités opposées respectives de l'assemblage de bobine préformée (20), une partie d'enroulement (22) enroulée autour du premier et du second support d'enroulement (30a, 30b) de manière à former une première et une seconde portion d'enroulement allongée (24a, 24b) avec une ouverture allongée (26) entre elles pour s'adapter autour d'une dent (12) d'un stator (10), la dent comprenant deux côtés latéraux opposés (14a, 14b), l'assemblage de bobine préformée (20) comprenant en outre un premier et un second film isolant (27a, 27b) disposés respectivement autour desdites première et seconde portions d'enroulement (24a, 24b), **caractérisé en ce que** chacun desdits premier et second films isolants (27a, 27b) comprend une partie pliée supérieure et une partie pliée inférieure (28a, 28b) comportant chacune une portion de film isolant superposée, un côté de chaque portion de film isolant superposé reposant sur une portion correspondante du film isolant (27a, 27b) sur un côté intérieur des première et seconde portions d'enroulement respectives (24a, 24b), l'autre côté de chaque portion de film isolant superposé reposant sur une première et une seconde parois opposées (38a, 38b) des supports d'enroulement respectifs (30a, 30b) pour assurer une première et une seconde distance (d1, d2) entre les côtés latéraux opposés respectifs (14a, 14b) de la dent (12) et une portion non-pliée correspondante (29) des premier et second films isolants respectifs (27a, 27b), lesdites première et seconde distances (d1, d2) étant égales de sorte que l'assemblage de bobine préformée (20) soit centré par rapport à ladite dent lorsqu'il est monté autour d'elle.

2. L'assemblage de bobine préformée (20) selon la revendication 1, dans lequel chacune desdites première et seconde distances (d1, d2) est comprise entre 0,2mm et 0,4mm.

3. L'assemblage de bobine préformée (20) selon la revendication précédente, dans lequel chacune desdites première et seconde distances (d1, d2) est sensiblement égale à 0,3mm.

4. L'assemblage de bobine préformée (20) selon l'une des revendications précédentes, dans lequel l'épaisseur de chacun desdits premier et second films isolants (27a, 27b) dans ladite région non-pliée (29) est comprise entre 0,2mm et 0,4mm et est de préférence sensiblement égale à 0,3mm, et dans lequel l'épaisseur du film dans lesdites parties pliées supérieure et inférieure (28a, 28b) est comprise entre 0,4mm et 0,8mm et est de préférence sensiblement égale à 0,6mm, l'épaisseur de chaque portion isolante de film superposé étant de préférence égale à 0,3mm.

5. L'assemblage de bobine préformée (20) selon l'une des revendications précédentes, dans lequel chacun des premier et second supports d'enroulement (30a, 30b) comprend une portion d'enroulement distale (32) et une portion de base (36) comprenant lesdites première et seconde parois latérales opposées (38a, 38b), la portion inférieure de la portion d'enroulement distale (32) adjointe à la portion de base (36) étant plus large que la portion de base, avec des protections (34a, 34b) s'étendant perpendiculairement aux première et seconde parois latérales opposées (38a, 38b) de la portion de base (36) jusqu'à une extrémité distale (25) de sorte qu'une région pliée (28c) de chacun des premier et second films isolants (27a, 27b) repose contre les projections correspondantes (34a, 34b), de préférence contre une surface plane de celles-ci.

6. L'assemblage de bobine préformée (20) selon la revendication précédente, dans lequel la distance (d3) entre chacune desdites parois latérales opposées (38a, 38b) et l'extrémité distale (25) des projections correspondantes (34a, 34b) est sensiblement égale à l'épaisseur des parties pliées correspondantes (28a, 28b) du film isolant correspondant (27a, 27b).

7. L'assemblage de bobine préformée (20) selon la revendication précédente, dans lequel ladite distance (d3) est sensiblement égale à 0,6mm.

8. L'assemblage de bobine préformée (20) selon l'une des revendications 5 à 7, dans lequel ladite portion d'enroulement distale (32) de chacun des premier et second supports d'enroulement (30a, 30b) comprend deux parois latérales opposées (33a, 33b) reposant sur une partie correspondante des première et seconde portions d'enroulement allongées (24a, 24b) qui n'est pas recouverte d'un film isolant.

9. Stator (10) pour moteur électrique comprenant une pluralité de dents (12) et une pluralité correspondante d'assemblages de bobines préformées (20) selon l'une des revendications précédentes, montés autour de ladite pluralité de dents, dans lequel la distance (d1, d2) entre les côtés latéraux opposés respectifs (14a, 14b) de chaque dent (12) et la portion non-pliée correspondante (29) respectivement du premier et du second film isolant (27a, 27b) forme un espace (40a, 40b) des deux côtés de chaque dent (40a, 40b) remplie d'une résine isolante.

10. Moteur électrique, notamment rotatif, comportant le stator (10) selon la revendication précédente.

11. Procédé de fabrication d'un assemblage de bobine préformée selon l'une des revendications 1 à 8, comprenant les étapes suivantes :
- montage d'un premier et d'un second support d'enroulement (30a, 30b) sur les extrémités respectives d'une structure supportrice d'enroulement, dans lequel chaque support d'enroulement comprend une partie d'enroulement distale (32) et une partie de base (36) comprenant deux parois latérales opposées (38a, 38b), la partie inférieure de la partie d'enroulement distale (32) attenante à la partie de base (36) étant plus large que la partie de base formant une première et une seconde série de protections (34a, 34b) s'étendant perpendiculairement aux parois latérales opposées respectives (38a, 38b) ;
- fournir un premier et un second film isolant (27a, 27b) et plier deux portions opposées de chacun desdits premier et second films isolants ;
- appliquer chaque portion pliée (28c) contre deux parois latérales opposées (38a, 38b) respectives des premier et second supports d'enroulement (30a, 30b), une région de pliage (28c) reposant contre une surface plane des première et seconde séries de protections (34a, 34b) du support d'enroulement correspondant (30a, 30b) ;
- tourner un fil autour des premier et second supports d'enroulement (30a, 30b) pour obtenir une partie d'enroulement (22) enroulée autour des premier et second supports d'enroulement (30a, 30b) de manière à former une première et une seconde portion d'enroulement allongée (24a, 24b) avec une ouverture allongée (26) entre les deux, et
- enrouler lesdits premier et second films isolants (27a, 27b) autour respectivement de ladite première et seconde portion d'enroulement allongée (24a, 24b).
